# EUROPÄISCHE PATENTSCHRIFT

(11) **EP 0 904 241 B1**
(45) Veröffentlichungstag und Bekanntmachung des Hinweises auf die Patenterteilung: **01.12.1999**
(21) Anmeldenummer: 97919239.0
(22) Anmeldetag: 05.05.1997
(51) Int. Cl.: B65G 17/44, B65G 15/42

(54) **VORRICHTUNG ZUM TRANSPORTIEREN VON PRODUKTEN**
PRODUCT-TRANSPORTING DEVICE
DISPOSITIF POUR TRANSPORTER DES PRODUITS

(30) Priorität: 08.05.1996 CH 117496
(43) Veröffentlichungstag der Anmeldung: 31.03.1999
(73) Patentinhaber: SIG Pack Systems AG, 8222 Beringen (CH)
(72) Erfinder: SPYCHER, Peter, CH-8045 Zürich (CH)
(74) Vertreter: Münch, Otto, Dipl.-Ing.
(86) Internationale Anmeldenummer: CH9700174
(87) Internationale Veröffentlichungsnummer: WO9742108

(56) Entgegenhaltungen:
- EP-A- 0 093 409
- DE-A- 4 309 888
- US-A- 3 580 388
- US-A- 3 659 472
- US-A- 4 143 759
- US-A- 4 494 456
- US-A- 4 723 652
- US-A- 5 333 723
- US-A- 5 429 226

## Beschreibung

Bei Verpackungsmaschinen ist es bekannt, Produkte taktweise mittels eines Zahnriemens zuzuführen, auf dessen Aussenseite Wagen befestigt sind. Um solche Vorrichtungen auf andere Produktformate umzustellen, ist es ferner bekannt, auf der Aussenseite des Zahnriemens in regelmässigen Abständen Nocken aufzuschweissen, auf welche die Wagen lösbar aufgeschraubt werden. Über eine Transportstrecke hinweg sind die Seitenränder der Zahnriemen gewöhnlich in Längsführungen geführt.

Aus der EP-A-93 409 ist eine Vorrichtung gemäss Oberbegriff des Anspruchs 1 bekannt. Sie hat einen um zwei Umlenkräder geführten Zahnriemen, an dem eine Vielzahl von Wagen befestigt ist. Die Wagen haben einen Befestigungsteil in Form einer flachen Platte und darauf aufgeschraubte Ringe zur Aufnahme von zu befüllenden Behältern. An der Platte ist beidseitig des Riemens ein Klemmelement aufgeschraubt. Die Klemmelemente umgreifen den Riemen und haben je einen Vorsprung, der in eine Zahnlücke des Riemens eingreift. Die Riemen sind etwa doppelt so breit wie die Umlenkräder.

Der vorliegenden Erfindung liegt die Aufgabe zugrunde, eine derartige Transportvorrichtung so auszubilden, dass sie einfach an unterschiedliche Produktformate angepasst werden kann. Diese Aufgabe wird durch die kennzeichnenden Merkmale des Anspruchs 1 gelöst.

Nachfolgend wird ein Ausführungsbeispiel der Erfindung anhand der Zeichnungen erläutert. Darin zeigt:
- Figur 1: einen Querschnitt durch einen Teil einer erfindungsgemässen Transportvorrichtung,
- Figur 2: einen Querschnitt durch die Darstellung nach Figur 1,
- Figur 3: eine vergrösserte Seitenansicht im Bereich eines Umlenkrades, und
- Figur 4: einen Axialschnitt durch ein Umlenkrad.

Die Vorrichtung umfasst einen um zwei verzahnte Umlenkräder 10 geführten Zahnriemen 11 mit Zähnen 12 und Zahnlücken 13, einer glatten Aussenfläche 14 und einen mittigen Keil (15) zur Seitenführung in einer entsprechenden Nut der Räder 10. Auf dem Riemen 11 sind in regelmässigem Abstand Wagen 20 befestigt. Diese haben einen Unterteil 21 und einen als Träger für die zu transportierenden Produkte 23 ausgebildeten Oberteil 22, der mit zwei Schrauben 24 lösbar und austauschbar am Unterteil 21 befestigt ist. Der Unterteil 21 besteht aus einem im Querschnitt U-förmigen Träger 25 und einem in diesem quer verschiebbar geführten Schieber 26. Der Träger 25 und der Schieber 26 bestehen vorzugsweise aus Kunststoff, z.B. aus Polyamid. Die Schenkel 27 des Trägers 25 haben je zwei parallel zur Aussenfläche 14 verlaufende Langlöcher 28, in welchen Querstifte 29 geführt sind. Die Stifte 29 sind durch Querbohrungen 30 des Schiebers 26 durchgesteckt. In der eingerückten Stellung ist der Schieber 26 durch ein Rastelement in Form einer federbelasteten Kugel 31 gesichert, welche in einer Querbohrung 32 des einen Trägerschenkels 27 einrastet.

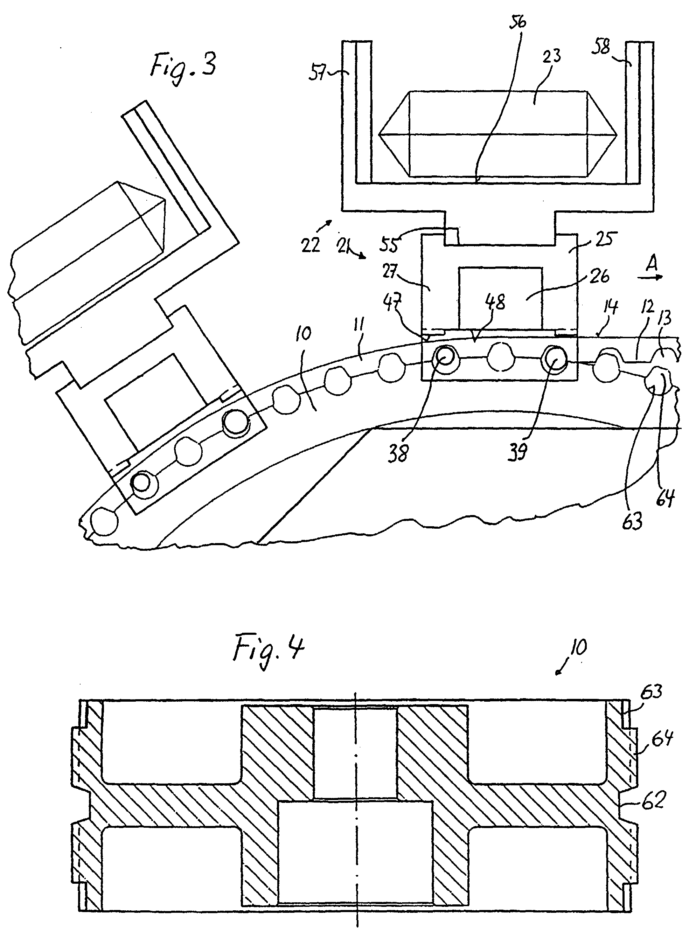

Der Träger 25 und der Schieber 26 umgreifen den Riemen 11 seitlich mit Vorsprüngen 34, 35 und haben je zwei nach innen ragende Stifte 36, 37, 38, 39. Die Stifte 36-39 greifen in Zahnlücken 13 des Riemens 11 ein. Je ein Stift 37, 39 des Trägers 25 und des Schiebers 26 hat einen grösseren Durchmesser als der andere Stift 36, 38. Die Achse der dünneren Stifte 36, 38 ist senkrecht zur Aussenfläche 14 gegenüber der Achse der Stifte 37, 39 so versetzt, dass alle Stifte 36-39 annähernd am Grund der Zahnlükken 13 anliegen. In Transportrichtung A ist der Unterteil 21 durch die Stifte 37, 39 formschlüssig gehalten. Der kleinere Durchmesser der Stifte 36, 38 gleicht die Abstandänderung der Zahnlücken 13 im Bereich der Räder 10 aus (Fig. 3). Die über den Vorsprung 35 vorstehende Länge der Stifte 38, 39 ist geringer als der Hub des Schiebers 26. In der ausgerückten Stellung des Schiebers 26 kann der Wagen 20 vom Riemen 11 abgenommen werden, indem er zunächst auf der Seite der Stifte 38, 39 angehoben und dann in Achsrichtung der Stifte seitlich verschoben wird. In dieser ausgerückten Stellung sind die beiden Schrauben 24 durch eine Bohrung 43 des Schiebers 26 und links des linken Stirnendes des Schiebers 26 in Figur 2 zugänglich. Der Schieber 26 und der Träger 25 haben je einen seitlich abstehenden, quaderförmigen Führungsschuh 44. Mindestens über die Arbeitsstrecke des Riemens 11 hinweg sind diese Schuhe 44 in entsprechenden Nuten 45 von Führungsschienen 46 in der Richtung senkrecht zur Aussenfläche 14 geführt. Der Träger 25 hat an beiden Schenkeln 27 auf der Aussenseite zwei Stützflächen 47, welche sich über die ganze Breite des Riemens 11 erstrecken. Dazwischen hat die Unterseite des Trägers 25 eine Ausnehmung 48. Die Unterseite des -Schiebers 26 reicht nur bis zu dieser Ausnehmung 48. Dadurch wird erreicht, dass der Träger 25 auch im Bereich der Räder 10 sauber geführt ist.

Der Oberteil 22 ist in einer flachen Nut 55 des Trägers 25 formschlüssig gehalten. Im dargestellten Ausführungsbeispiel ist er in der Seitenansicht U-förmig und hat eine Tragfläche 56, einen Mitnehmer 57 und einen Gegenhalter 58. Für grössere Produkte 23 können jedoch andere Oberteile 22 auf den Unterteil 27 geschraubt werden, die z.B. abwechselnd nur einen Mitnehmer 57 und nur einen Gegenhalter 58 haben, so dass das Produkt 23 von zwei Wagen 20 getragen wird. Für noch längere Produkte 23 kann jeweils ein Oberteil 22 ohne Mitnehmer 57 und Gegenhalter 58 dazwischen angeordnet werden. Auch Oberteile 22 mit einem Steg in der Mitte der Tragfläche 56 können in einigen Anwendungsfällen sinnvoll sein, wobei die Produkte 22 jeweils zwischen zwei Stegen benachbarter Wagen 20 gehalten sind. Das ist insbesondere von Vorteil, wenn die Wagen 20 auf dem Umfang des einen Rades 10 beschickt werden, weil dort die Stege in diesem Fall gespreizt sind.

Die Umlenkräder 10 haben eine mittige Nut 62 (Fig. 4) zur Seitenführung des Zahnriemens 11, der mit dem z.B. geschlitzten Keil 15 in diese Nut 62 eingreift. An beiden axialen Enden sind längs des ganzen Umfangs halbkreisförmige Ausnehmungen 63 eingefräst, welche mit den Zähnen 64 fluchten. Der Durchmesser dieser Ausnehmungen 63 ist grösser als jener der dickeren Stifte 37, 39, so dass alle Stifte 36-39 in diesen Ausnehmungen 63 Spiel haben. Die Länge der Ausnehmungen 63 ist grösser als die über die Vorsprünge 34, 35 vorstehende Länge der Stifte 36-39.

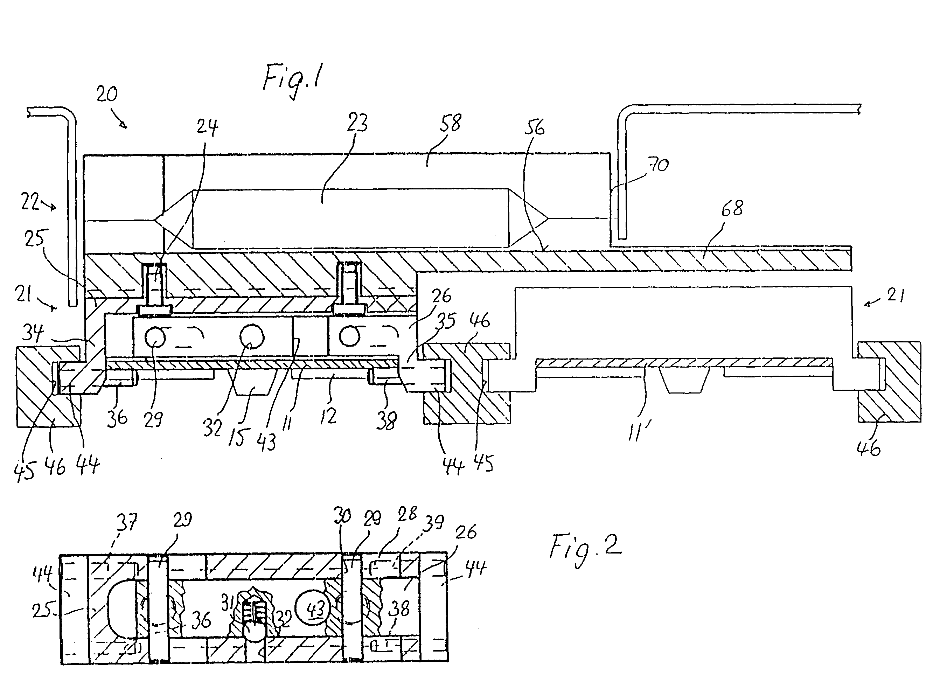

Wie aus Figur 1 hervorgeht, sind in der Vorrichtung zwei Zahnriemen 11, 11' nebeneinander angeordnet. Diese sind über separat angetriebene Räder 10 geführt. Jeder der beiden Zahnriemen 11, 11' hat über den ganzen Umfang gleichmässig verteilt die aufgesteckten Unterteile 21. Die Oberteile 22 sind jedoch auf jedem Riemen 11, 11' in Gruppen aufgesteckt, welche sich über weniger als die Hälfte des Umfangs der Riemen 11, 11' erstrecken. Die Oberteile 22 des einen Riemens 11 überragen den anderen Riemen 11' mit einer Ausladung 68. Die auf dem anderen Riemen 11' aufgesteckten Oberteile 22 sind bis auf die Mitnehmer 57 und Gegenhalter 58 bezüglich der Mittelebene zwischen den Riemen 11, 11' spiegelsymmetrisch zu den in Figur 1 dargestellten Oberteilen 22. Die Mitnehmer und Gegenhalter dieser zweiten Gruppe haben ihre Stirnenden in der selben Umlaufebene wie die Stirnenden 70 der Mitnehmer 57 und Gegenhalter 58. Alternativ ist es auch möglich, auch die Unterteile 21 nur in Gruppen entsprechend den Oberteilen 22 aufzustecken. Dadurch kann die Bauhöhe der Wagen 20 reduziert werden, was die Beanspruchung beim Beschleunigen und Verzögern der Riemen 11, 11' vermindert.

Im Betrieb werden die beiden Antriebe der betreffenden Räder 10 der Riemen 11, 11' so gesteuert, dass in einer Beladestation die Wagen 20 der einen Gruppe den Wagen 20 der vorangehenden Gruppe im Abstand der Teilung der Wagen 20 innerhalb der Gruppe folgen.

Die beschriebene Vorrichtung ist sehr schnell an andere Produktformate anpassbar. Die Wagen 20 brauchen dazu nur gegen andere mit passender Länge und Abstand von Mitnehmern 57 und Gegenhaltern 58 ausgetauscht zu werden. Die Teilung zwischen den Wagen 20 ist in Schritten der Zahnteilung des Riemens 11 beliebig wählbar. Die Führung der Wagen 20 ist vom Zahnriemen 11 getrennt und erfolgt über die Führungschuhe 44, so dass der Zahnriemen 11 geschont wird. Die Verschleissflächen sind an einem Wechselteil angeordnet. Die Wagenführung ist wegen der relativ grossen Länge der Schuhe 44 und wegen des grossen Abstandes der beiden Schuhe 44 voneinander stabil. Durch die doppelte Abstützung der Wagen auf den Stützflächen 47 ist die Wagenführung auch in den Umlenkungen stabil. Die Vorrichtung ermöglicht die Verwendung handelsüblicher Standardriemen ohne aufgeschweisste oder aufgeklebte Nocken. Beim Wechseln der Teilung der Wagen braucht der Zahnriemen 11 nicht ausgetauscht zu werden.

## Patentansprüche

1. Vorrichtung zum Transportieren von Produkten (23), umfassend einen um mindestens zwei Umlenkräder (10) geführten, endlosen Zahnriemen (11) sowie eine Vielzahl daran befestigter Wagen (20), wobei die Wagen (20) einen Unterteil (21) aufweisen, welcher den Zahnriemen (11) beidseitig mit Vorsprüngen (34, 35) umgreift und mit Stützflächen (47) auf ihm abgestützt ist, und wobei an jedem Vorsprung (34, 35) mindestens ein Eingriffselement befestigt ist, das in eine Zahnlücke (13) des Zahnriemens (11) eingreift, dadurch gekennzeichnet, dass die Eingriffselemente als Stifte (36-39) ausgebildet sind, und dass der Stift bzw. die Stifte (38, 39) auf der einen Seite des Zahnriemens (11) auf einem Schieber (26) befestigt ist bzw. sind, welcher am Wagen (20) in Achsrichtung des Stiftes bzw. der Stifte (38, 39) verschiebbar gelagert ist.

2. Vorrichtung nach Anspruch 1, wobei jeder Wagen (20) zusätzlich beidseits Führungsglieder (44) zur Führung in Richtung senkrecht zur Aussenfläche (14) des Zahnriemens (11) hat, welche in Führungsschienen (46) laufen, wobei sich die Führungsschienen (46) zumindest über einen Teil des Umfangs des Zahnriemens (11) erstrecken.

3. Vorrichtung nach Anspruch 1 oder 2, wobei der Schieber (26) in der Eingriffstellung dieses Stiftes (38, 39) durch Rastelemente (31, 32) gehalten ist.

4. Vorrichtung nach einem der Ansprüche 1 bis 3, wobei der Wagen (20) einen Oberteil (22) umfasst, der lösbar und austauschbar mit dem Unterteil (21) verbunden ist, und wobei der Oberteil mindestens der Hälfte der Wagen (20) einen Mitnehmer (57) und/oder einen Gegenhalter (58) aufweist.

5. Vorrichtung nach einem der Ansprüche 1 bis 4, wobei die Umlenkräder (10) mindestens annähernd die Breite des Zahnriemens (11) haben und beidseits an jedem ihrer Zähne (64) Ausnehmungen (63) für die Stifte ( 36-39) aufweisen.

6. Vorrichtung nach Anspruch 5, wobei die Ausnehmungen (63) breiter sind als die breitesten Stifte (36-39).

7. Vorrichtung nach einem der Ansprüche 1 bis 6, wobei der Wagen (20) auf beiden Seiten zwei Stifte (36-39) aufweist, die unterschiedlich breit sind, so dass der eine von ihnen in der betreffenden Nut (13) des Zahnriemens (11) Spiel in Längsrichtung des Zahnriemens (11) hat.

8. Vorrichtung nach einem der Ansprüche 1 bis 7, wobei der Wagen (20) zwei voneinander in Transportrichtung (A) beabstandete Stützflächen (47) und dazwischen eine Ausnehmung (48) aufweist.

9. Vorrichtung nach einem der Ansprüche 1 bis 8, wobei nebeneinander zwei gleiche je separat angetriebene Zahnriemen (11, 11') mit Umlenkrädern (10) angeordnet sind, wobei auf jedem Zahnriemen (11, 11') je eine Gruppe von Wagen (20) befestigt ist, wobei die Länge der Gruppen geringer ist als die Hälfte des Umfangs der Zahnriemen (11, 11') und wobei die auf dem einen Zahnriemen (11) befestigten Wagen (20) den anderen Zahnriemen (11') überlappen.

## Claims

1. Device for conveying products (23), including an endless toothed belt (11) guided around at least two guide wheels (10) and a plurality of trucks (20) secured thereto, the trucks (20) having a lower part (21) which embraces the toothed belt (11) on either side by means of projections (34, 35) and is supported thereon by means of supporting surfaces (47), and at least one engagement element which engages in a tooth space (13) in the toothed belt (11) being secured to each projection (34, 35), characterised in that the engagement elements are in the form of pins (36-39) and that the pin or pins is/are secured on one side of the toothed belt (11) on a slide (26) which is mounted on the truck (20) in such a manner that it can be displaced in the axial direction of the pin or pins (38, 39).

2. Device according to claim 1, in which each truck (20) is additionally provided on either side with guide members (44) for guiding in the direction perpendicular to the outer surface (14) of the toothed belt (11), running in guide rails (46), the guide rails (46) extending at least over part of the circumference of the toothed belt (11).

3. Device according to claim 1 or claim 2, in which the slide (26) is held in the engagement position of this pin (38, 39) by means of locking elements (31,32).

4. Device according to one of claims 1 to 3, in which the truck (20) includes an upper part (22) which is removably and exchangeably connected to the lower part (21), and in which the upper parts of at least half the trucks (20) have a carrier (57) and/or a retainer (58).

5. Device according to one of claims 1 to 4, in which the guide wheels (10) have at least approximately the width of the toothed belt (11) and are provided on either side on each of their teeth (64) with recesses (63) for the pins (36-39).

6. Device according to claim 5, in which the recesses (63) are wider than the widest pins (36-39).

7. Device according to one of claims 1 to 6, in which the truck (20) is provided on either side with two pins (36-39) of different widths, such that one of them has play in the relevant groove (13) in the toothed belt (11) in the longitudinal direction of the toothed belt (11).

8. Device according to one of claims 1 to 7, in which the truck (20) has two supporting surfaces (47) at a distance from one another in the conveying direction (A) and a recess (48) therebetween.

9. Device according to one of claims 1 to 8, in which two identical separately driven toothed belts (11, 11') with guide wheels (10) are arranged one alongside the other, a group of trucks (20) being secured to each toothed belt (11, 11'), the length of the groups being smaller than half the circumference of the toothed belts (11, 11') and the trucks (20) secured to one toothed belt (11) overlapping the other toothed belt (11').

## Revendications

1. Dispositif pour transporter des produits (23), comprenant une courroie crantée continue (11) guidée autour d'au moins deux roues de renvoi (10), ainsi qu'une pluralité de chariots (20) fixés sur elle, les chariots (20) présentant une partie inférieure (21), qui entoure la courroie crantée (11) de part et d'autre par des saillies (34, 35) et est soutenue sur elle par des surfaces d'appui (47), et dans lequel sur chaque saillie (34, 35) est fixé au moins un élément d'engagement, qui s'engage dans un entre-dent (13) de la courroie crantée (11), caractérisé en ce que les éléments d'engagement sont réalisés sous la forme de tétons (36, 39) et en ce que le téton, respectivement les tétons (38, 39) est, respectivement sont, fixé(s), sur un côté de la courroie crantée (11), sur un coulisseau (26) qui est monté sur le chariot (20), déplacable dans la direction axiale du téton, respectivement des tétons (38, 39).

2. Dispositif selon la revendication 1, dans lequel chaque chariot (20) comporte en plus des deux côtés des organes de guidage (44) destinés à guider dans la direction perpendiculaire par rapport à la face extérieure (14) de la courroie crantée (11), ces organes de guidage défilant dans des glissières de guidage (46), dans lequel les glissières de guidage (46) s'étendent au moins sur une partie de la circonférence de la courroie crantée (11).

3. Dispositif selon la revendication 1 ou 2, dans lequel le coulisseau (26) est maintenu au moyen d'éléments d'encliquetage (31, 32) lorsque ce téton (38, 39) se trouve dans la position d'engagement.

4. Dispositif selon l'une des revendication 1 à 3, dans lequel le chariot (20) comprend une partie supérieure (22), qui est reliée, de façon désolidarisable et remplaçable, à la partie inférieure (21), et la partie supérieure d'au moins la moitié du chariot (20) présentant un organe d'entraînement (57) et/ou un contre-support (58).

5. Dispositif selon l'une des revendications 1 à 4, dans lequel les roues de renvoi (10) ont au moins la largeur de la courroie crantée (11) et présentent des deux côtés, sur chacune de leurs dents (64), des évidements (63) destinés aux tétons (36-39).

6. Dispositif selon la revendication 5, dans lequel les évidements (63) sont plus larges que les tétons (36-39) les plus larges.

7. Dispositif selon l'une des revendications 1 à 6, dans lequel le chariot (20) présente sur ses deux côtés deux tétons (36-39), qui sont de largeurs différentes, de manière que l'un d'entre eux ait dans la rainure (13) concernée de la courroie crantée (11) un jeu en direction longitudinale de la courroie crantée (11).

8. Dispositif selon l'une des revendications 1 à 7, dans lequel le chariot (20) présente deux faces d'appui (47) espacées l'une dans l'autre dans la direction de transport (A) et, en position intermédiaire, un évidement (48).

9. Dispositif selon l'une des revendications 1 à 8, dans lequel deux courroies crantées (11,11'), entraînées chacune séparément, équipées de roues de renvoi (10), sont disposées l'une à côté de l'autre, dans lequel un groupe de chariots (20) est fixé sur chaque courroie crantée (11,11'), la longueur des groupes étant inférieure à la moitié de la circonférence de la courroie crantée(11,11') et les chariots(20) fixés sur une courroie crantée (11), chevauchant l'autre courroie crantée (11').
